# EUROPÄISCHE PATENTSCHRIFT

(11) **EP 1 709 822 B1**
(45) Veröffentlichungstag und Bekanntmachung des Hinweises auf die Patenterteilung: **18.06.2008**
(21) Anmeldenummer: 04821184.1
(22) Anmeldetag: 19.11.2004
(51) Int. Cl.: H04Q 7/22, H04L 12/56, H04Q 7/32

(54) **MOBILES ENDGERÄT ZUM EMPFANG PAKETORIENTIERTER RUNDFUNKSIGNALE**
MOBILE TERMINAL DEVICE FOR RECEIVING PACKET-ORIENTED RADIO SIGNALS
TERMINAL MOBILE SERVANT A LA RECEPTION DE SIGNAUX RADIO TRANSMIS PAR PAQUETS

(30) Priorität: 27.01.2004 DE 102004004092
(43) Veröffentlichungstag der Anmeldung: 11.10.2006
(73) Patentinhaber: SIEMENS AKTIENGESELLSCHAFT, 80333 München (DE)
(72) Erfinder: BÄR, Siegfried, 85716 Unterschleissheim (DE); SURANTYN, Yves, 80798 München (DE)
(86) Internationale Anmeldenummer: PCT/EP2004/053012
(87) Internationale Veröffentlichungsnummer: WO 2005/071986

(56) Entgegenhaltungen:
- EP-A- 1 237 302
- WO-A-02/39758
- WO-A-03/045064

## Beschreibung

Die vorliegende Erfindung betrifft ein mobiles Endgerät, insbesondere ein Mobilfunkgerät, für ein zellulares Mobilfunksystem, bzw. ein Verfahren zum Empfang von Telefonanrufen und paketorientierten Rundfunksignalen in einem mobilen Endgerät, insbesondere einem Mobilfunkgerät, welches in einem zellularen Mobilfunksystem kommuniziert.

Mobile Endgeräte bzw. Verfahren zum Empfang von Telefonanrufen und paketorientierten Rundfunksignalen in einem mobilen Endgerät finden unter Anderem in Mobilfunkgeräten der dritten Generation Anwendung.

Mobile Endgeräte welche beispielsweise nach dem GSM- (Global System for Mobile Communications) oder UMTS- (Universal Mobile Communications System) Standard betrieben werden sind in zunehmendem Maße nicht ausschließlich für die Sprachtelephonie ausgelegt. So besteht bei Nutzern solcher mobilen Endgeräte der Wunsch, weitere Übertragungskanäle, wie beispielsweise paketorientierte Rundfunksignale, mit Hilfe des mobilen Endgeräts empfangen zu können.

Bei Mobilfunkgeräten der dritten Generation, wie beispielsweise nach dem UMTS-Standard arbeitenden Mobilfunkgeräten, sind Übertragungen mit hohen Datenraten, beispielweise sogenannte "Videostreams", standardmäßig möglich. Allerdings ergeben sich dabei zwei grundsätzliche Probleme. Zum Einen entstehen für den Nutzer hohe Übertragungskosten, zum Anderen gibt es Kapazitätsengpässe, wenn beispielsweise zu viele Nutzer innerhalb einer UMTS-Funkzelle Videostreams abrufen.

Bisher sind wenige mobilen Endgeräte bekannt, welche einen Empfang paketorientierter Rundfunksignale erlauben, und gleichzeitig eine Erreichbarkeit für Telefonanrufe gewährleisten. Die bestehen aber alle aus zwei unabhängigen Einheiten, jeweils verantwortlich für den Empfang paketorientierter Rundfunksignale beziehungsweise für die Kommunikation mit dem zellularen Mobilfunksystem

Aus der EP-A-1 237 302 ist ein Mobilfunksystem bekannt, bei dem von einem Endgerät sowohl Signale eines zellularen UMTS-Systems als auch von Multimediadiensten eines Rundsende-UMTS-Systems empfangen werden können, wobei die Systeme ein jeweils unterschiedliches Frequenzband nutzen.

Aus der WO 03/045064 A1 ist ein hybrides Telekommunikationssystem bekannt, bei dem Dienste mit niedriger Bandbreite über ein Mobilfunknetzwerk, Dienste mit höherer Bandbreite hingegen über ein Rundsendenetzwerk bereitgestellt werden.

Somit ist eine Aufgabe der vorliegenden Erfindung, ein mobiles Endgerät und ein Verfahren der eingangs genannten Art bereitzustellen, welche bei geringem Einsatz von Bauteilen einen Empfang paketorientierter Rundfunksignale und gleichzeitiger telefonischer Erreichbarkeit ermöglichen.

Diese Aufgabe wird durch das mobile Endgerät mit den Merkmalen des Anspruchs 1 und das Verfahren mit den Merkmalen des Anspruchs 8 gelöst. Vorteilhafte Weiterbildungen der Erfindung ergeben sich aus den abhängigen Ansprüchen.

Das erfindungsgemäße mobile Endgerät, insbesondere Mobilfunkgerät, für ein zellulares Mobilfunksystem weist Mittel zum Empfang eines Telefonanrufes, Mittel zum Empfang paketorientierter Rundfunksignale, und Mittel zur Auswahl mindestens eines Übertragungsdienstes, welcher mit Hilfe der paketorientierten Rundfunksignale übertragen wird, auf. Das erfindungsgemäße mobile Endgerät ist dafür ausgelegt, mindestens einen Zeitschlitz von dem Netzwerk des Mobilfunksystems signalisiert zu bekommen, welcher in Abhängigkeit von dem ausgewählten Übertragungsdienst bestimmt wurde, und ist ferner dazu geeignet, während des mindestens einen Zeitschlitzes den Empfang der paketorientierten Rundfunksignale auszusetzen und während des mindestens einen Zeitschlitzes ein Funkrufsignal zu empfangen, welches einen an das mobile Endgerät gerichteten Telefonanruf signalisiert, so dass das mobile Endgerät während des Empfangs der paketorientierten Rundfunksignale für Telefonanrufe erreichbar bleibt.

Bei dem erfindungsgemäßen Verfahren zum Empfang von Telefonanrufen und paketorientierten Rundfunksignalen in einem mobilen Endgerät, insbesondere einem Mobilfunkgerät, welches in einem zellularen Mobilfunksystem kommuniziert, wird mindestens ein Übertragungsdienst, welcher mit Hilfe der paketorientierten Rundfunksignale übertragen wird, ausgewählt. Erfindungsgemäß bekommt das mobile Endgerät mindestens einen Zeitschlitz von dem Netzwerk des Mobilfunksystems signalisiert, welcher in Abhängigkeit von dem ausgewählten Übertragungsdienst bestimmt wurde. Der Empfang der paketorientierten Rundfunksignale wird während des mindestens einen Zeitschlitzes ausgesetzt, und es wird während des mindestens einen Zeitschlitzes ein Funkrufsignal empfangen, welches einen an das mobile Endgerät gerichteten Telefonanruf signalisiert, so dass das mobile Endgerät während des Empfangs der paketorientierten Rundfunksignale für Telefonanrufe erreichbar bleibt.

Bei dem erfindungsgemäßen mobilen Endgerät kann es sich um jede Art von Endgerät handeln, welches in einem zellularen Mobilfunksystem Sprachkommunikation ermöglicht und darüber hinaus paketorientierte Rundfunksignale empfangen kann. Bevorzugt handelt es sich dabei um ein Mobilfunkgerät, ein so genanntes "Smart Phone" oder einen "Personal Digital Assistant" (PDA). Hinsichtlich der zu verwendenden Mobilfunkstandards ist die Erfindung auf keine Technologie beschränkt, solange die Übertragung zeitschlitzorientiert erfolgt.

Bei dem paketorientierten Rundfunksignal werden die zu übertragenden Informationsinhalte in digitale Datenpakete codiert und mit Hilfe von Rundfunksignalen an alle in dem Sendegebiet befindlichen Empfänger gesendet. Beispielweise handelt es sich bei dem paketorientierten Rundfunksignal um ein so genanntes DVB-Signal. DVB (Digital Video Broadcasting) ist ein digitaler Video-Übertragungs-Standard, welcher mit Hilfe von Rundfunksignalen verbreitet wird. Es gibt dabei unter Anderem eine terrestrische Variante DVB-T und eine auf mobile Endgeräte abgestimmte Variante DVB-H. Die DVB-H-Variante ist für geringeren Energieverbrauch beim Signalempfang als die DVB-T-Variante ausgelegt, so dass sich die DVB-H-Variante bevorzugt für den Einsatz in mobilen Endgeräten eignet.

Die Mittel zum Empfang paketorientierter Rundfunksignale ermöglichen einen entsprechenden Empfang solcher DVB-Signale.

Die Mittel zum Empfang eines Telefonanrufes ermöglichen eine Kommunikation eines mobilen Endgeräts in einem zellularen Mobilfunksystem mit weiteren mobilen Endgeräten. Eine solche Kommunikation kann beispielsweise über den UMTS-Standard erfolgen.

Bei den Mitteln zur Auswahl mindestens eines Übertragungsdienstes, welcher mit Hilfe der paketorientierten Rundfunksignale übertragen wird, handelt es sich beispielsweise um eine auf dem Display des mobilen Endgeräts angezeigte Menüstruktur, über welche der Nutzer des mobilen Endgeräts einen Übertragungsdienst auswählen kann. Denkbar ist, dass es sich bei den Übertragungsdiensten um Fernsehkanäle handelt. Die Auswahl des mindestens einen Übertragungsdienstes kann aber auch durch den Netzbetreiber voreingestellt sein und somit von ihm ausgewählt werden.

Bevorzugt handelt es sich bei dem Funkrufsignal um den Funkrufkanal PCH (Paging Channel). Das sogenannte "Paging" über den Funkrufkanal PCH findet insbesondere bei den Mobilfunkstandards GSM und UMTS Anwendung. Es handelt sich bei dem Funkrufkanal um einen sogenannten "Downlink-Transportkanal", das heißt einen Funkkanal, welcher immer über die gesamte Mobilfunkzelle von der Basisstation zu den mobilen Endgeräten übertragen wird. Der Funkrufkanal PCH signalisiert dem jeweiligen mobilen Endgerät, dass das Netzwerk das mobile Endgerät kontaktieren will, weil beispielsweise ein Telefonanruf an das mobile Endgerät weitergeleitet werden soll.

In einer bevorzugten Ausführungsform weist das mobile Endgerät Mittel zum Berechnen der Zeitintervalle, in denen der mindestens eine Übertragungsdienst übertragen wird, und Mittel zum Senden der berechneten Zeitintervalle an das Netzwerk des Mobilfunksystems, auf, so dass in dem Netzwerk der mindestens eine Zeitschlitz bestimmt werden kann, während dessen das mobile Endgerät den ausgewählten Übertragungsdienst nicht empfangen muss.

Auf Seiten des mobilen Endgeräts wird mit Hilfe der Mittel zur Auswahl mindestens einen Übertragungsdienstes ein gewünschter Übertragungsdienst ausgewählt. Anschließend wird in dem Endgerät das zu dem Übertragungsdienst gehörige Empfangszeitprofil berechnet, d.h. es werden die Zeitintervalle bestimmt, während welchen das zu dem Übertragungsdienst gehörige paketorientierte Rundfunksignal empfangen werden muss. Somit werden auch die Zeitintervalle bestimmt, in welchen ein Empfang nicht notwendig ist. Dieses Zeitprofil wird von dem mobilen Endgerät an das Netzwerk des Mobilfunksystems übermittelt.

Netzwerkseitig empfängt das Netzwerk des Mobilfunksystems das in dem mobilen Endgerät berechnete Zeitprofil von dem mobilen Endgerät und sucht nach einem Paging-Zeitschlitz, welcher sich nicht mit den Zeitintervallen, während welchen das mobile Endgerät das paketorientierte Rundfunksignal empfangen muss, überlappt. Anschließend informiert das Netzwerk des Mobilfunksystems das mobile Endgerät über den zugewiesenen Zeitschlitz des Funkrufsignals. Dabei handelt es sich bevorzugt um einen zugewiesenen PCH-Zeitschlitz. Somit weiß das mobile Endgerät von nun an, zu welchem Zeitpunkt Telefonanrufe über den Funkrufkanal signalisiert werden können.

In einer alternativen Ausführungsform weist das mobile Endgerät Mittel zum Senden der ausgewählten Übertragungsdienste an das Netzwerk des Mobilfunksystems auf. Dadurch können in dem Netzwerk die Zeitintervalle, in denen der mindestens eine Übertragungsdienst von dem mobilen Endgerät empfangen wird, und davon abhängig der mindestens eine Zeitschlitz berechnet werden, während dessen das mobile Endgerät den ausgewählten Übertragungsdiensten nicht empfangen muss. Bei dieser Ausführungsform wird wiederum ein Übertragungsdienst mit Hilfe der Mittel zur Auswahl mindestens eines Übertragungsdienstes in dem mobilen Endgerät ausgewählt. Anschließend wird diese Auswahl dem Netzwerk des Mobilfunksystems durch das mobile Endgerät übermittelt. Die Berechnung der Zeitintervalle, während welchen der Empfang der paketorientierten Rundfunksignale notwendig ist und der Zeitintervalle, in welchen kein Empfang erfolgen muss, wird dabei in dem Netzwerk des Mobilfunksystems berechnet bzw. bestimmt. Dafür soll das Netzwerk des Mobilfunksystems eine Verbindung mit dem Netzwerk des paketorientierten Rundfunksignals aufweisen. Anschließend bestimmt das Netzwerk des Mobilfunksystems einen Paging-Zeitschlitz, welcher nicht mit den Zeitintervallen, während welchen das mobile Endgerät die paketorientierten Rundfunksignale für eine ordentliche Darstellung des ausgewählten Übertragungsdienstes empfangen muss, überlappt. Weiter anschließend informiert das Netzwerk des Mobilfunksystems das mobile Endgerät über den zugewiesenen Zeitschlitz des Funkrufsignals. Bei dem Zeitschlitz handelt es sich wiederum bevorzugt um einen PCH-Zeitschlitz. Diese Ausführungsform hat den Vorteil, dass die Signalisierung zwischen dem mobilen Endgerät und dem Netzwerk des Mobilfunksystems reduziert wird.

Weiter bevorzugt weist das mobile Endgerät Mittel zum Senden der Synchronisierungsgeschwindigkeit des mobilen Endgeräts an das Netzwerk des Mobilfunksystems auf. Verschiedene mobile Endgeräte können bei der Synchronisierung, d.h. beispielsweise bei der Signalerfassung, schneller oder langsamer sein. Dies kann das Zeitprofil beeinflussen und sollte dem Netzwerk mitgeteilt werden.

In einer Weiterbildung der vorliegenden Erfindung ist das mobile Endgerät geeignet, bei Empfang eines Funkrufsignals während des mindestens einen Zeitschlitzes, mit Hilfe der Mittel zum Empfang eines Telefonanrufs eine Sprachverbindung mit dem zellularen Mobilfunksystem aufzubauen und den Empfang des paketorientierten Rundfunksignal weiter auszusetzen. Das mobile Endgerät ist somit in der Lage, paketorientierte Rundfunksignale zu empfangen, und dennoch für eingehende Telefonanrufe erreichbar zu sein.

Bevorzugt ist das mobile Endgerät geeignet, falls kein Funkrufsignal während des mindestens einen Zeitschlitzes empfangen wurde, den Empfang des paketorientierten Rundfunksignals während eines darauffolgenden Zeitschlitzes wieder aufzunehmen. Bevorzugt erfolgt die Wiederaufnahme in dem nächsten Zeitschlitz.

Weiter bevorzugt handelt es sich bei dem mindestens einen Zeitschlitz um einen periodisch wiederkehrenden Zeitschlitz. Da die mobilen Endgerät synchronisiert sind, wissen sie nach einmaliger Signalisierung des zu überwachenden Zeitschlitzes stets, wann der nächste zu überwachende Zeitschlitz auftritt.

In einer weiteren Ausführungsform der Erfindung handelt es sich bei dem mindestens einen Zeitschlitz um einen Zeitschlitz, der einer Gruppe von mobilen Endgeräten zugeordnet wurde, welche den gleichen Übertragungsdienst im paketorientierten Rundfunksignal empfangen. Eine Gruppe empfängt jeweils den selben Übertragungsdienst im paketorientierten Rundfunksignal. Jeder Gruppe ist ein spezieller Zeitschlitz zugeordnet, während dessen das Netzwerk den Funkrufkanal dazu verwenden kann, ein mobiles Endgerät dieser Gruppe zu rufen. Das mobile Endgerät weiß, zu welcher Gruppe es gehört und welcher Zeitschlitz ihr zugeordnet wurde. Dies bedeutet, dass jedem mobilen Endgerät bekannt ist, wann das Netzwerk ihm einen eingehenden Telefonanruf signalisieren kann. Entsprechend muss es dem Zeitschlitz also nur während des Zeitintervalls des Zeitschlitzes überwachen. Der Zeitintervall ist relativ klein, so dass für mobilen Endgeräte, die keine paketorientierten Rundfunksignale empfangen, Energie eingespart werden kann, da sie nur den einen Zeitschlitz bezüglich des Funkrufsignals überwachen.

In einer Weiterbildung der vorliegenden Erfindung weist das mobile Endgerät nur eine Mobilfunk-Sende/Empfangsvorrichtung für die Mittel zum Empfang eines Telefonanrufes und die Mittel zum Empfang eines paketorientierten Rundfunksignals auf. Es ist kein simultaner Empfang von paketorientierten Rundfunksignalen und Telefonanrufen notwendig, da erfindungsgemäß auch während des Empfangs paketorientierter Rundfunksignale, Telefonanrufe dem mobilen Endgerät signalisiert werden können. Folglich benötigt das mobile Endgerät für den Empfang von paketorientierten Rundfunksignalen und Telefonanrufen nur eine Empfangseinheit bzw. nur ein Sende-/Empfangsmodul, d.h. nur ein so genanntes "Transceiver-Modul", welches die notwendigen Bauelemente wie Empfänger, Modem, etc. aufweist. Ein solches Transceiver-Modul muss dabei lediglich zu den beiden Systemen kompatibel sein und des Weiteren von einer Frequenz auf die andere abgestimmt werden können.

Die Vorsehung eines Transceiver-Moduls hat gegenüber einer Ausführungsform mit zwei Transceiver-Modulen Vorteile hinsichtlich Größe, Leistungsverbrauch und Kosten, was insbesondere bei für den Massenmarkt produzierten Endgeräten entscheidende Vorteile liefert.

Darüber hinaus ist durch die vorgeschlagene Lösung keine wesentliche Änderung der gegenwärtig verwendeten Übertragungsstandards notwendig. Mobile Endgeräte, welche die erfindungsgemäßen Merkmale nicht unterstützen, können auf normale Weise weiter betrieben werden und sind weiterhin im Stande, Übertragungssignale zu empfangen oder mit anderen zellularen Mobilfunksysteme zu kommunizieren.

Die Erfindung betrifft des Weiteren ein Rundfunknetzwerk zum Senden paketorientierter Rundfunksignale. Das Rundfunknetzwerk steht mit einem zellularen Netzwerk in Verbindung und ist dazu geeignet, paketorientierte Rundfunksignale an ein erfindungsgemäßes mobiles Endgerät zu senden.

Die Erfindung wird im Folgenden unter Hinweis auf die beigefügte Zeichnung anhand mehrerer Ausführungsbeispiele näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigt:

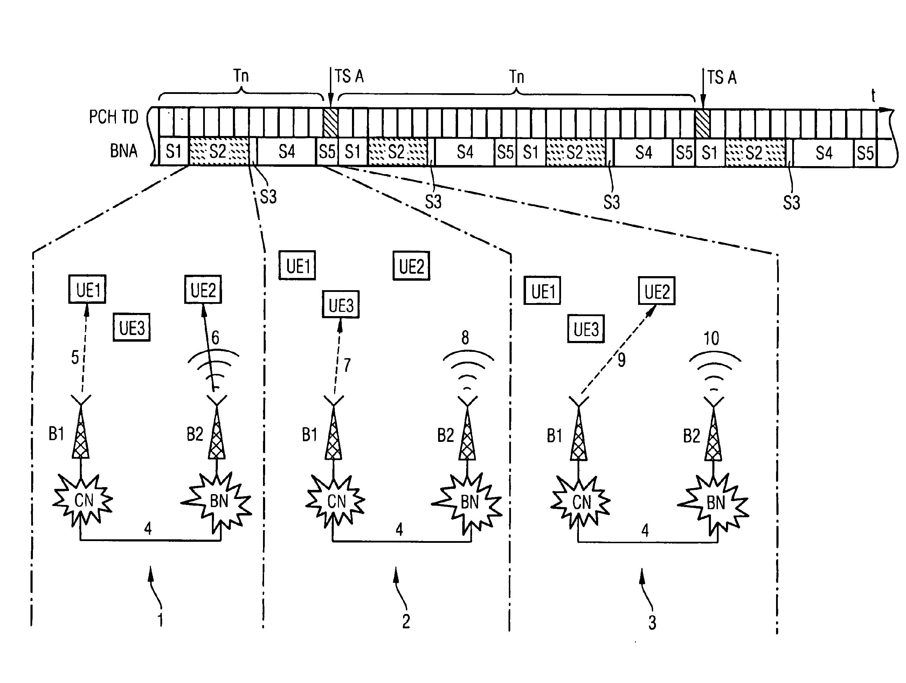

- Figur 1: eine schematische Darstellung eines Systems zum Empfang von Telefonanrufen und paketorientierten Rundfunksignalen.

Figur 1 zeigt in der oberen Hälfte der schematischen Darstellung zwei Zeitschlitzverteilungen über der Zeit T. Die obere Reihe PCH TD zeigt die Zeitschlitzverteilung des Funkrufkanals PCH und die untere Reihe BNA die Verteilung des Multiplexes im Rundfunknetzwerk, welches paketorientierte Rundfunksignale überträgt. Ein weißer Zeitschlitz bedeutet in der oberen Reihe, dass keine Funkrufsignale für das mobile Endgerät UE2 während des jeweiligen Zeitschlitzes übertragen werden. Ein schraffierter Zeitschlitz zeigt eine Aktivität bzw. eine Überwachung des Zeitschlitzes an.

Wie aus der Aktivität des Rundfunknetzwerkes BNA ersichtlich ist, werden die Übertragungsdienste S1, S2, S3, S4 du S5 im Zeitmultiplex übertragen. Diese Übertragungsdienste werden mit unterschiedlichen Datenraten gesendet. Während des Zeitintervalls Tn erfolgt keine Übertragung über den Funkrufkanal PCH für das mobile Endgerät UE2. Der Zeitschlitz TS A wird für eine Übertragung eines Funkrufsignals freigehalten. Zu diesem Zeitpunkt überwachen die jeweiligen mobilen Endgeräte den Funkrufkanal und warten auf eine Funkrufsignalisierung, welche an das mobile Endgerät gerichtete Telefonanrufe signalisiert.

In der unteren Hälfte der schematischen Darstellung gemäß Figur 1 sind die Zustände 1, 2 und 3 dargestellt, welche nachfolgend erläutert werden:

Im Zustand 1 wird ein mobiles Kommunikationsnetzwerk mit drei mobilen Endgeräten UE1, UE2 und UE3 gezeigt. Bei den mobilen Endgeräten UE1, UE3 handelt es sich um Standard-Mobilfunkgeräte, welche lediglich per Sprachtelephonie kommunizieren können. Bei dem mobilen Endgerät UE2 handelt es sich um ein sogenanntes "Dual-Mode"-Gerät, welches in den zwei Modi Sprachkommunikation und paketorientierter Rundfunkempfang betriebe werden kann. Das mobile Endgerät UE2 hat folglich die Möglichkeit, Telefonanrufe und des Weiteren auch paketorientierte Rundfunksignale, insbesondere DVB-Signale zu empfangen.

Das gezeigte Mobilfunksystem besteht aus einem zellularen Netzwerk CN, welches mit einem Rundfunknetzwerk BN in synchronisierter Verbindung 4 steht. Das zellulare Netzwerk CN ist mit mindestens einer Basisstation B1 verbunden, welche mit den mobilen Endgeräten UE1, UE2 oder UE3 in Verbindung treten kann. Das Rundfunknetzwerk BN ist mit einer weiteren Basisstation B2 verbunden, welche DVB-Signale an alle im Sendegebiet befindlichen Teilnehmer aussendet.

Wie in dem Zustand 1 ersichtlich ist, besteht eine Sprachverbindung 5 zwischen dem zellularen Netzwerk CN und dem mobilen Endgerät UE1 über die Basisstation B1. Der Nutzer des mobilen Endgeräts UE2 hat ein Fernsehprogramm S2, welches über ein DVB-Signal übertragen wird, in seinem mobilen Endgerät ausgewählt. Das DVB-Signal 6 wird von dem Rundfunknetzwerk BN über die Basisstation B2 während der in der Zeile BNA gezeigten Zeitdauer an das mobile Endgerät UE2 übertragen.

In dem Endgerät UE2 wurde nach Auswahl des Fernsehprogramms S2 durch den Nutzer des Endgerätes ein Zeitprofil für den Empfang der dazugehörigen DVB-Signale berechnet. Dieses Zeitprofil wurde dem zellularen Netzwerk CN übermittelt, welches daraufhin den Zeitschlitz TS A bestimmt und diesen dem mobilen Endgerät UE2 mitgeteilt (nicht eingezeichnet).

In dem Zustand 2 muss das mobile Endgerät UE2 keine DVB-Signale für das Fernsehprogramm S2 empfangen. Von der Basisstation B2 werden nur DVB-Signale 8 für die Übertragungsdienste S3, S4 und S5 übertragen. Dennoch ist es möglich, dass andere mobile Endgeräte in diesem Fall das mobile Endgerät UE3, über den Funkrufkanal hinsichtlich eingehender Anrufe kontaktiert werden.

Der Zustand 3 zeigt die Situation während des Zeitschlitzes TS A. Nur während dieses Zeitschlitzes, welcher von dem Rundfunknetzwerk BN über die Basisstation B2 dem mobilen Endgeräts UE2 signalisiert wurde, muss das mobile Endgerät den Funkkanal PCH überwachen. Falls ein Anruf für das mobile Endgerät UE2 eingeht, so wird ihm dieser über den Funkrufkanal PCH signalisiert 9. Während des Zeitschlitzes TS A werden keine für den Empfang des gewünschten Fernsehprogramms S2 notwendige paketorientierte Rundfunkdaten von der Basisstation B2 übertragen. Es erfolgt lediglich eine Übertragung von für den Übertragungsdienst S5 relevanten Daten 10. Die nächste mögliche Signalisierung eines eingehenden Anrufes erfolgt zum Zeitpunkt des periodisch wiederkehrenden Zeitschlitzes TS A im Anschluss an das Zeitintervall Tn.

Da die Rundfunksignale paketorientiert von der Basisstation B2 übertragen werden, kann die Übertragungssequenz der Datenpakete verändert werden, ohne die Servicequalität "Quality of Service" verschlechtern zu müssen.

## Patentansprüche

1. Mobiles Endgerät (UE2), insbesondere Mobilfunkgerät, für ein zellulares Mobilfunksystem, aufweisend
Mittel zum Empfang eines Telefonanrufs,
Mittel zum Empfang paketorientierter Rundfunksignale (6), Mittel zur Auswahl mindestens eines Übertragungsdienstes, welcher mit Hilfe der paketorientierten Rundfunksignale (6) übertragen wird, wobei das mobile Endgerät (UE2)
**dadurch gekennzeichnet ist** mindestens einen Zeitschlitz (TS A) von dem Netzwerk des Mobilfunksystems signalisiert zu bekommen, welcher in Abhängigkeit von dem ausgewählten Übertragungsdienst bestimmt wurde, und ferner dazu geeignet ist, während des mindestens einen Zeitschlitzes (TS A) den Empfang der paketorientierten Rundfunksignale (6) auszusetzen und während des mindestens einen Zeitschlitzes (TS A) ein Funkrufsignal (9) zu empfangen, welches einen an das mobile Endgerät (UE2) gerichteten Telefonanruf signalisiert, so dass das mobile Endgerät (UE2) während des Empfangs der paketorientierten Rundfunksignale (6) für Telefonanrufe erreichbar bleibt.

2. Mobiles Endgerät gemäß Anspruch 1, aufweisend
Mittel zum Berechnen der Zeitintervalle, in denen der mindestens eine Übertragungsdienst übertragen wird, und
Mittel zum Senden der berechneten Zeitintervalle an das Netzwerk des Mobilfunksystems, so dass in dem Netzwerk der mindestens eine Zeitschlitz bestimmt werden kann, währenddessen das mobile Endgerät (UE2) den ausgewählten Übertragungsdienst nicht empfängt.

3. Mobiles Endgerät gemäß Anspruch 1, aufweisend
Mittel zum Senden der ausgewählten Übertragungsdienste an das Netzwerk des Mobilfunksystems, so dass in dem Netzwerk die Zeitintervalle, in denen der mindestens eine Übertragungsdienst von dem mobilen Endgerät (UE2) empfangen wird, und davon abhängig der mindestens eine Zeitschlitz berechnet werden kann, währenddessen das mobile Endgerät (UE2) den ausgewählten Übertragungsdienst nicht empfängt.

4. Mobiles Endgerät gemäß Anspruch 3, aufweisend
Mittel zum Senden der Synchronisierungsgeschwindigkeit des mobilen Endgeräts an das Netzwerk des Mobilfunksystems

5. Mobiles Endgerät gemäß einem der vorhergehenden Ansprüche, welches geeignet ist, bei Empfang eines Funkrufsignals (9) während des mindestens einen Zeitschlitzes (TS A), mit Hilfe der Mittel zum Empfang eines Telefonanrufs eine Sprachverbindung mit dem zellularen Mobilfunksystem aufzubauen, und den Empfang des paketorientierten Rundfunksignals weiter auszusetzen.

6. Mobiles Endgerät gemäß einem der vorhergehenden Ansprüche, welches geeignet ist, falls kein Funkrufsignal während des mindestens einen Zeitschlitzes empfangen wurde, den Empfang des paketorientierten Rundfunksignals während eines darauffolgenden Zeitschlitzes (Tn) wieder aufzunehmen.

7. Mobiles Endgerät gemäß einem der vorhergehenden Ansprüche, bei dem das mobile Endgerät nur eine Mobilfunk-Sende-/Empfangsvorrichtung für die Mittel zum Empfang eines Telefonanrufs und die Mittel zum Empfang eines paketorientierten Rundfunksignals aufweist.

8. Verfahren zum Empfang von Telefonanrufen und paketorientierten Rundfunksignalen (6) in einem mobilen Endgerät (UE2), insbesondere einem Mobilfunkgerät, welches in einem zellularen Mobilfunksystem kommuniziert, bei dem mindestens ein Übertragungsdienst, welcher mit Hilfe der paketorientierten Rundfunksignale (6) übertragen wird, ausgewählt wird, **gekennzeichnet dadurch, daß** das mobile Endgerät (UE2) mindestens einen Zeitschlitz (TS A) von dem Netzwerk des Mobilfunksystems signalisiert bekommt, welcher in Abhängigkeit von dem ausgewählten Übertragungsdienst bestimmt wurde,
während des mindestens einen Zeitschlitzes (TS A) der Empfang der paketorientierten Rundfunksignale (6) ausgesetzt wird, und
während des mindestens einen Zeitschlitzes (TS A) ein Funkrufsignal (9) empfangen wird, welches einen an das mobile Endgerät (UE2) gerichteten Telefonanruf signalisiert, so dass das mobile Endgerät (UE2) während des Empfangs der paketorientierten Rundfunksignale (6) für Telefonanrufe erreichbar bleibt.

9. Verfahren gemäß Anspruch 8, bei dem
die Zeitintervalle, in denen der mindestens eine Übertragungsdienst übertragen wird, berechnet werden und
die berechneten Zeitintervalle an das Netzwerk des Mobilfunksystems gesendet werden, so dass in dem Netzwerk der mindestens eine Zeitschlitz (TS A) bestimmt werden kann, währenddessen das mobile Endgerät (UE2) den ausgewählten Übertragungsdienst nicht empfängt.

10. Verfahren gemäß Anspruch 8, bei dem
die ausgewählten Übertragungsdienste an das Netzwerk des Mobilfunksystems gesendet werden, so dass in dem Netzwerk die Zeitintervalle, in denen der mindestens eine Übertragungsdienst von dem mobilen Endgerät empfangen wird, und davon abhängig der mindestens eine Zeitschlitz (TS A) berechnet werden kann, währenddessen das mobile Endgerät (UE2) den ausgewählten Übertragungsdienst nicht empfängt.

11. Verfahren gemäß Anspruch 10, bei dem
die Synchronisierungsgeschwindigkeit des mobilen Endgeräts (UE2) an das Netzwerk des Mobilfunksystems gesendet wird.

12. Verfahren gemäß einem der Ansprüche 8 bis 11, bei dem
bei Empfang eines Funkrufsignals (9) während des mindestens einen Zeitschlitzes (TS A), mit Hilfe der Mittel zum Empfang eines Telefonanrufs eine Sprachverbindung mit dem zellularen Mobilfunksystem aufgebaut wird, und der Empfang des paketorientierten Rundfunksignals weiter ausgesetzt wird.

13. Verfahren gemäß einem der Ansprüche 8 bis 12, bei dem, falls kein Funkrufsignal während des mindestens einen Zeitschlitzes empfangen wurde, der Empfang des paketorientierten Rundfunksignals während eines darauffolgenden Zeitschlitzes (Tn) wieder aufgenommen wird.

14. Verfahren gemäß einem der Ansprüche 8 bis 13,
bei dem der mindestens eine Zeitschlitz periodisch wiederkehrend zugeordnet wird.

15. Verfahren gemäß einem der Ansprüche 8 bis 14,
bei dem der mindestens eine Zeitschlitz einer Gruppe von mobilen Endgeräten zugeordnet wurde, welche den gleichen Übertragungsdienst im paketorientierten Rundfunksignal empfangen.

16. Verfahren gemäß einem der Ansprüche 8 bis 15,
bei dem es sich bei dem paketorientierten Rundfunksignal um ein DVB-Signal handelt, und/oder
bei dem es sich bei dem Funkrufsignal um den Funkrufkanal PCH handelt.

17. Verfahren gemäß einem der Ansprüche 8 bis 16,
bei dem eine einzige Mobilfunk-Sende-/Empfangsvorrichtung in dem mobilen Endgerät die Telefonanrufe und die paketorientierten Rundfunksignale empfängt.

18. Rundfunknetzwerk (BN) zum Senden paketorientierter Rundfunksignale (6), welches mit einem zellularen Netzwerk (CN) in Verbindung steht und dazu geeignet ist, paketorientierte Rundfunksignale (6) an ein mobiles Endgerät (UE2) gemäß einem der Ansprüche 1 bis 11 zu senden.

## Claims

1. Mobile terminal device (UE2), in particular a mobile radio terminal, for a cellular mobile telecommunication system, having
means for receiving a telephone call,
means for receiving packet-oriented radio signals (6),
means for selecting at least one transmission service which is transmitted using the packet-oriented radio signals (6), with the mobile terminal device (UE2) being **characterised** to receive at least one time slot (TS A) from the network of the mobile telecommunication system, said time slot having been determined in accordance with the selected transmission service, and being further designed so that during the at least one time slot (TS A) it suspends reception of the packet-oriented radio signals (6) and during the at least one time slot (TS A) it receives a radio paging signal (9) which signals a telephone call addressed to the mobile terminal device (UE2) so that the mobile terminal device (UE2) remains accessible for telephone calls during reception of the packet-oriented radio signals (6).

2. Mobile terminal device according to claim 1, having
means for computing the time intervals in which the at least one transmission service is transmitted, and
means for transmitting the computed time intervals to the mobile telecommunication system network, so that the at least one time slot during which the mobile terminal device (UE2) need not receive the selected transmission service can be determined in the network.

3. Mobile terminal device according to claim 1, having
means for transmitting the selected transmission services to the mobile telecommunication system network, so that the time intervals in which the at least one transmission service will be received by the mobile terminal device (UE2), and depending on those, the at least one time slot during which the mobile terminal device (UE2) need not receive the selected transmission service, can be computed in the network.

4. Mobile terminal device according to claim 3, having
means for transmitting the synchronization speed of the mobile terminal device to the mobile telecommunication system network.

5. Mobile terminal device according to one of the preceding claims, being able, on receiving a radio paging signal (9) during the at least one time slot (TS A), to use the means for receiving a telephone call to establish a voice connection to the cellular mobile telecommunication system and to further suspend the reception of the packet-oriented radio signal.

6. Mobile terminal device according to one of the preceding claims, being able, if no radio paging signal is received during the at least one time slot, to resume receiving the packet-oriented radio signal during a subsequent time slot (Tn) .

7. Mobile terminal device according to one of the preceding claims, in which the mobile terminal device has only one mobile radio transmitting and receiving device for the means for receiving a telephone call and the means for receiving a packet-oriented radio signal.

8. Method for receiving telephone calls and packet-oriented radio signals (6) in a mobile terminal device (UE2), in particular a mobile radio terminal communicating in a cellular mobile telecommunication system, in which at least one transmission service transmitted using the packet-oriented radio signals (6) is selected, **characterised in that**
the mobile terminal device (UE2) receives a signal regarding at least one time slot (TS A) from the network of the mobile telecommunication system, said time slot being determined in accordance with the selected transmission service, during the at least one time slot (TS A) reception of the packet-oriented radio signals (6) is suspended, and
during the at least one time slot (TS A) a radio paging signal (9) is received, signalling a telephone call addressed to the mobile terminal device (UE2), so that the mobile terminal device (UE2) remains accessible to telephone calls during reception of the packet-oriented radio signals (6).

9. Method according to claim 8, in which
the time intervals in which the at least one transmission service is transmitted are computed, and the computed time intervals are transmitted to the mobile telecommunication system network, so that the at least one time slot (TS A) during which the mobile terminal device (UE2) need not receive the selected transmission service can be determined in the network.

10. Method according to claim 8,
in which the selected transmission services are transmitted to the mobile telecommunication system network, so that the time intervals in which the at least one transmission service will be received by the mobile terminal device, and depending on those, the at least one time slot (TS A) during which the mobile terminal device (UE2) need not receive the selected transmission service, can be computed in the network.

11. Method according to claim 10, in which
the synchronization speed of the mobile terminal device (UE2) is transmitted to the mobile telecommunication system network.

12. Method according to one of claims 8 to 11, in which
on receiving a radio paging signal (9) during the at least one time slot (TS A), the means for receiving a telephone call is used to establish a voice connection to the cellular mobile telecommunication system and reception of the packet-oriented radio signal is further suspended.

13. Method according to one of claims 8 to 12, in which
if no radio paging signal is received during the at least one time slot, reception of the packet-oriented radio signal is resumed during a subsequent time slot (Tn).

14. Method according to one of claims 8 to 13,
in which the at least one time slot is made periodically recurring.

15. Method according to one of claims 8 to 14,
in which the at least one time slot has been assigned to a group of mobile terminal devices receiving the same transmission service from the packet-oriented radio signal.

16. Method according to one of claims 8 to 15,
in which the packet-oriented radio signal is of the type known as a DVB signal and/or in which the radio paging signal is of the type known as the paging channel PCH.

17. Method according to one of claims 8 to 16,
in which a single mobile radio transmitting and receiving device in the mobile terminal device receives the telephone calls and the packet-oriented radio signals.

18. Broadcast network (BN) for transmitting packet-oriented
radio signals (6) which is connected to a cellular network (CN) and is able to transmit packet-oriented radio signals (6) to a mobile terminal device (UE2) as claimed in one of claims 1 to 11.

## Revendications

1. Terminal mobile (UE2), en particulier appareil radio mobile, pour un système radio mobile cellulaire, comportant
- des moyens de réception d'un appel téléphonique,
- des moyens de réception de signaux radio orientés paquets (6),
- des moyens de sélection d'au moins un service de transmission qui est transmis à l'aide des signaux radio orientés paquets (6), le terminal mobile (UE2) étant **caractérisé en ce qu'**il reçoit, sous une forme signalée par le réseau du système radio mobile, au moins un créneau temporel (TS A) qui a été déterminé en fonction du service de transmission sélectionné et qui, en outre, est adapté pour suspendre, pendant l'au moins un créneau temporel (TS A), la réception des signaux radio orientés paquets (6) et pour recevoir, pendant l'au moins un créneau temporel (TS A), un signal d'appel radio (9) qui signale un appel téléphonique adressé au terminal mobile (UE2) de sorte que le terminal mobile (UE2) reste joignable pour des appels téléphoniques pendant la réception des signaux radio orientés paquets (6).

2. Terminal mobile selon la revendication 1, comportant des moyens pour calculer les intervalles de temps dans lesquels l'au moins un service de transmission est transmis et des moyens pour envoyer les intervalles de temps calculés au réseau du système radio mobile de sorte qu'il est possible de déterminer, dans le réseau, l'au moins un créneau temporel pendant lequel le terminal mobile (UE2) ne reçoit pas le service de transmission sélectionné.

3. Terminal mobile selon la revendication 1, comportant des moyens pour envoyer les services de transmission sélectionnés au réseau du système radio mobile de sorte qu'il est possible de calculer, dans le réseau, les intervalles de temps dans lesquels l'au moins un service de transmission est reçu par le terminal mobile (UE2) et, en fonction de cela, l'au moins un créneau temporel pendant lequel le terminal mobile (UE2) ne reçoit pas le service de transmission sélectionné.

4. Terminal mobile selon la revendication 3, comportant des moyens pour envoyer la vitesse de synchronisation du terminal mobile au réseau du système radio mobile.

5. Terminal mobile selon l'une des revendications précédentes, lequel est adapté pour établir une liaison vocale avec le système radio mobile cellulaire à la réception d'un signal d'appel radio (9) pendant l'au moins un créneau temporel (TS A) à l'aide des moyens de réception d'un appel téléphonique et de continuer de suspendre la réception du signal radio orienté paquets.

6. Terminal mobile selon l'une des revendications précédentes, lequel est adapté pour, si aucun signal d'appel radio n'a été reçu pendant l'au moins un créneau temporel, reprendre la réception du signal radio orienté paquets pendant un créneau temporel subséquent (Tn).

7. Terminal mobile selon l'une des revendications précédentes, dans lequel le terminal mobile comporte uniquement un dispositif radio mobile émetteur / récepteur pour les moyens de réception d'un appel téléphonique et les moyens de réception d'un signal radio orienté paquets.

8. Procédé de réception d'appels téléphoniques et de signaux radio orientés paquets (6) dans un terminal mobile (UE2), en particulier un appareil radio mobile, qui communique dans un système radio mobile cellulaire, dans lequel au moins un service de transmission qui est transmis à l'aide des signaux radio orientés paquets (6) est sélectionné, **caractérisé en ce que**
- le terminal mobile (UE2) reçoit, sous une forme signalée par le réseau du système radio mobile, au moins un créneau temporel (TS A) qui a été déterminé en fonction du service de transmission sélectionné,
- la réception des signaux radio orientés paquets (6) est suspendue pendant l'au moins un créneau temporel (TS A) et
- pendant l'au moins un créneau temporel (TS A), un signal d'appel radio (9) est reçu, lequel signale un appel téléphonique adressé au terminal mobile (UE2) de sorte que le terminal mobile (UE2) reste joignable pour des appels téléphoniques pendant la réception des signaux radio orientés paquets (6).

9. Procédé selon la revendication 8, dans lequel les intervalles de temps dans lesquels l'au moins un service de transmission est transmis sont calculés et les intervalles de temps calculés sont envoyés au réseau du système radio mobile de sorte qu'il est possible de déterminer, dans le réseau, l'au moins un créneau temporel (TS A) pendant lequel le terminal mobile (UE2) ne reçoit pas le service de transmission sélectionné.

10. Procédé selon la revendication 8, dans lequel les services de transmission sélectionnés sont envoyés au réseau du système radio mobile de sorte qu'il est possible de calculer, dans le réseau, les intervalles de temps dans lesquels l'au moins un service de transmission est reçu par le terminal mobile et, en fonction de cela, l'au moins un créneau temporel (TS A) pendant lequel le terminal mobile (UE2) ne reçoit pas le service de transmission sélectionné.

11. Procédé selon la revendication 10, dans lequel la vitesse de synchronisation du terminal mobile (UE2) est envoyée au réseau du système radio mobile.

12. Procédé selon l'une des revendications 8 à 11, dans lequel une liaison vocale avec le système radio mobile cellulaire est établie à la réception d'un signal d'appel radio (9) pendant l'au moins un créneau temporel (TS A) à l'aide des moyens de réception d'un appel téléphonique et la réception du signal radio orienté paquets continue d'être suspendue.

13. Procédé selon l'une des revendications 8 à 12, dans lequel, si aucun signal d'appel radio n'a été reçu pendant l'au moins un créneau temporel, il y a reprise de la réception du signal radio orienté paquets pendant un créneau temporel subséquent (Tn).

14. Procédé selon l'une des revendications 8 à 13, dans lequel l'au moins un créneau temporel est affecté d'une manière qui se répète périodiquement.

15. Procédé selon l'une des revendications 8 à 14, dans lequel l'au moins un créneau temporel a été affecté à un groupe de terminaux mobiles qui reçoivent le même service de transmission dans le signal radio orienté paquets.

16. Procédé selon l'une des revendications 8 à 15, dans lequel le signal radio orienté paquets est un signal DVB et/ou dans lequel le signal d'appel radio est le canal d'appel radio PCH.

17. Procédé selon l'une des revendications 8 à 16, dans lequel un unique dispositif radio mobile émetteur / récepteur, dans le terminal mobile, reçoit les appels téléphoniques et les signaux radio orientés paquets.

18. Réseau radio (BN) pour émettre des signaux radio orientés paquets (6), lequel est en relation avec un réseau cellulaire (CN) et est adapté pour envoyer des signaux radio orientés paquets (6) à un terminal mobile (UE2) selon l'une des revendications 1 à 11.
